Europäisches Patentamt

European Patent Office

Office européen des brevets

(19)

(11) Publication number: **0 119 751**
**B1**

# EUROPEAN PATENT SPECIFICATION

(12)

(45) Date of publication of patent specification: **30.09.87**

(51) Int. Cl.⁴: **H 04 N 7/16**

(21) Application number: **84301033.1**

(22) Date of filing: **17.02.84**

(54) Scrambling system of television signal.

(30) Priority: **18.02.83 JP 26485/83**
**04.11.83 JP 207841/83**
**10.11.83 JP 211981/83**

(43) Date of publication of application:
**26.09.84 Bulletin 84/39**

(45) Publication of the grant of the patent:
**30.09.87 Bulletin 87/40**

(84) Designated Contracting States:
**DE FR GB**

(56) References cited:
**DE-A-2 947 943**
**US-A-4 319 273**
**US-A-4 336 553**

(73) Proprietor: **SANYO ELECTRIC CO., LTD.**
**18, Keihanhondori 2-chome**
**Moriguchi-shi Osaka-fu (JP)**

(72) Inventor: **Nohara, Kazunori**
**Sanyo Denki Umemachi-Ryo No. 210 18,**
**Umemachi**
**Moriguchi-shi Osaka-fu, 570 (JP)**
Inventor: **Tanmatsu, Katsuo**
**2-8-20, Myokenhigashi**
**Katano-shi Osaka-fu, 576 (JP)**
Inventor: **Hosoya, Nobukazu**
**580-7, Hidehara Heguri-cho**
**Ikoma-gun Nara-ken, 636 (JP)**
Inventor: **Higashino, Takeshi**
**Sanyo Denki Sumionodo-Ryo 2-5-21, Horai**
**Daito-shi Osaka-fu, 574 (JP)**

(74) Representative: **Ellis, Edward Lovell et al**
**MEWBURN ELLIS & CO. 2/3 Cursitor Street**
**London EC4A 1BQ (GB)**

Courier Press, Leamington Spa, England.

## Description

### Background of the Invention
#### *Field of the Invention*

The present invention relates generally to a subscription television system (pay-television system) and, more particularly, to a scrambling system of a television signal which may be received by any television receiver but can be reproduced properly only by the television receivers of the subscribers and can not be reproduced properly by the television receivers of non-subscribers.

#### *Description of the Prior Art*

In some subscription television system, it is desired that the television broadcasting service is charged to each subscriber not only by the channels, but by the programs. This can be accomplished by broadcasting scrambled television signal which can not be properly reproduced by the normal television receiver, but can be properly reproduced by the television receiver of authorized system subscriber by the employment of a suitable decoder.

According to one prior art scrambling system, the television signal is scrambled by merely changing the polarity of the video signal or by the minor change in the synchronizing pulses. Such simple scrambling methods, however, may be easily descrambled, or unscrambled, and therefore, the television programs can be easily reproduced by non-subscribers. On the contrary, if the television signal is scrambled in a complex manner, it becomes not only difficult to descramble the signal, but also may result in deterioration in the reproduced picture.

According to another prior art scrambling system shown in German Specification No. 2,947,943 there is disclosed a method of coding and decoding video signals. The coding of the television signals is effected at the transmitter by suppressing synchronization pulses during the video horizontal and vertical blanking intervals by means of gates and inserting clock and address information in the suppressed intervals by means of a line modulator and address gate. The decoding is effected at the receiver by detecting the synchronized video and clock information, the clock pulse being used to control a synchronization pulse generator to provide synchronized pulses which are then ·recombined with the unsynchronized video signals.

It should be noted that in the German Specification No. 2,947,943, the horizontal and vertical synchronization pulses are formed only by the clock signal detected at the receiver. Thus the synchronization pulse generator has a complicated structure and has difficulty in precisely adjusting the phase of the vertical synchronization pulse.

It is therefore an object of the present invention to overcome the above referred to defects in the prior art systems, and thus provide a scrambling system for a television signal which cannot be produced by non-subscribers and which can be descrambled without affecting the clarity of the reproduced picture.

According to the present invention there is provided a scrambling system for a television signal including:—

means for eliminating vertical synchronization pulses in a vertical synchronization pulse period and equalizing pulses in the first and second equalizing pulse periods at opposite ends of said vertical synchronization pulse period;

means for depositing substitue pulses in said vertical synchronization pulse period and first and second equalizing pulse periods with at least one section remained unoccupied by said substitute pulses, said substitute pulses having a frequency equal to an integer times the frequency of the horizontal synchronization pulses; and

means for depositing a framing code in said one section, said framing code carrying information of television signal scrambling;

characterized in that:

(a) the framing code is synchronized with the substitute pulse and is inserted in the section unoccupied by the substitute pulses so as to maintain the phase of the substitute pulses unchanged; and

(b) the framing code carries the information of scramble so as to enable the descrambling in the receiver and the information of the time reference for generating the vertical synchronization pulse in the receiver.

The present invention will now be described in greater detail by way of examples, with reference to the accompanying drawings, wherein:—

Figure 1 is a diagrammatic view of waveforms of the television signal before and after the scramble, in which waveforms (a) and (b) represent even field, and waveforms (a') and (b') represent odd field;

Fig. 2 shows waveforms of 1H line period of the original television signal and scrambled television signals in two different stages;

Fig. 3 shows waveforms of the television signal of 1H line period in which the video signal is shifted down, horizontal sync pulses P1 and deformation pulses W to be replaced by the pulses P1;

Fig. 4 shows waveforms of the television signal of 1H line period in the vertical blanking period before and after the scramble;

Fig. 5 shows a circuit diagram for scrambling the television signal according to the first embodiment of the present invention;

Fig. 6 shows waveforms obtained at various points in the circuit of Fig. 5;

Fig. 7 shows a circuit diagram for descrambling the television signal according to the first embodiment of the present invention;

Fig. 8 shows waveforms for indicating the operation of circuit of Fig. 7;

Figs. 9(a) and 9(b) show a diagrammatic view of a waveform of the television signal after the scramble;

Fig. 10 is a diagrammatic view of waveforms of the television signal after the scramble, in which waveform (a) represents even field, and waveform (a') represents odd field;

Field 11 is a circuit diagram for scrambling the television signal according to the second embodiment of the present invention; and

Fig. 12 is a circuit diagram for descrambling the television signal according to the second embodiment of the present invention.

Description of the Preferred Embodiments

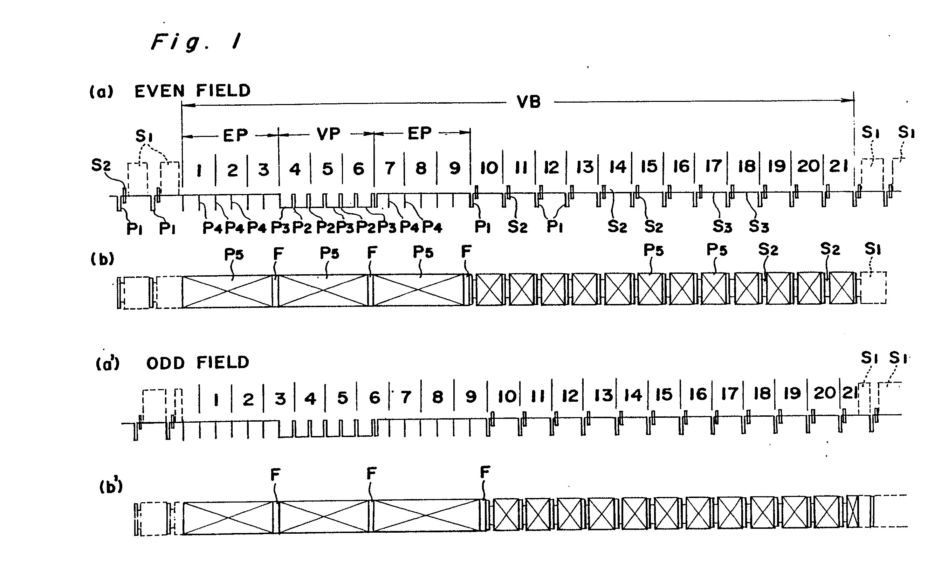

Referring to Fig. 1, a waveform (a) represents a television signal of an even field particularly the vertical blanking period VB before being scrambled. In the illustration: P1 represents a horizontal sync pulse; S1 represents a video signal; S2 represents a color burst signal; P3 represents vertical sync pulse formed by separation pulses P2; and P4 represents equalizing pulses provided in equalizing pulse periods EP appearing before and after the vertical sync pulse period VP, and each being 3H lines long. Also, in the illustration, the serial numbers from 1 to 21 represent the line number.

A waveform (b) represents a television signal which has been scrambled from the television signal of waveform (a) through the scrambling system according to the present invention. In waveform (b), the equalizing pulses P4 and vertical sync pulses P3 appearing in lines 1 to 9 are eliminated and, instead, substitute pulses P5, having a frequency equal to N times the frequency fH of horizontal sync pulses P1, wherein N is an integer, are provided with framing codes F inserted at three positions suitably separated from each other. The three framing codes F have exactly the same code pattern to each other, and carries information of television signal scrambling, such as how the television signal is scrambled. It is to be noted that the framing codes F are connected to the substitute pulse P5 with no break in continuity.

Since the vertical sync pulses P3 and equalizing pulses P4 are eliminated and the substitute pulses P5 are placed instead at vertical sync pulse period VP and equalizing pulse periods EPs, it is impossible to effect the vertical synchronization by the normal television receiver, resulting in an indiscernible picture.

In order to increase the scrambling effect, the video signals S1, appearing in lines other than lines 1 to 21, can be shifted downwardly for a predetermined amount from the clamp level as described below.

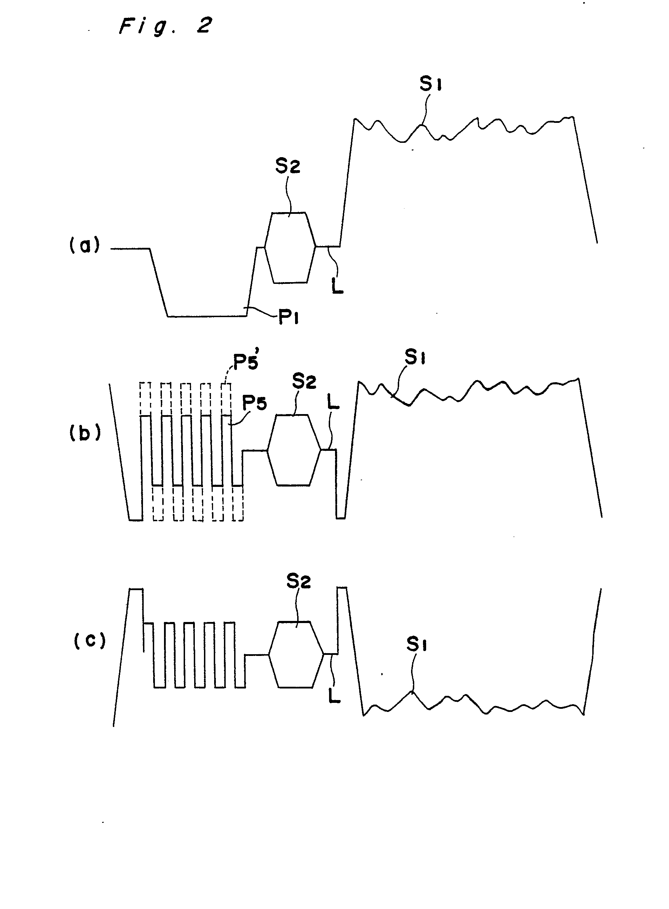

Referring to Fig. 2, a waveform (a) shows a television signal of 1H length before being scrambled, in which P1 is a horizontal sync pulse, S2 is a color burst signal, L is pedestal level and S1 is video signal. A waveform (b) shows a condition of the television signal in which the video signal S1 is shifted down for a predetermined amount. This amount may be such that when the amplitude of the video signal from the pedestal level L to the peak point for the color white is 70 and the amplitude of the horizontal sync pulse P1 is −30, the shift amount of the video signal is set equal to a half of the video signal amplitude, i.e., equal to 35. If this shift is done, it not only results in the change of luminance, but also results in difficulty in horizontal synchronization by the television receiver, because the average DC level of the video signal is dropped. More specifically, in the television receiver, the horizontal sync pulses P1 are detected when such a pulse P1 falls below a predetermined threshold level, and if the above shift is done, pulses other than P1 may be detected.

Still referring to Fig. 2, to further emphasize the scrambling effect, the horizontal sync pulse P1 is replaced by substituted pulses P5, as shown in waveform (b). In this case, the amplitude of the substituted pulses P5 may be approximately equal to that of the pulse P1 as indicated by a dotted line P5', but it is preferable to render it small as indicated by a real line P5, from the view point of horizontal sync pulse detection.

A waveform (c) in Fig. 2 shows a condition in which the shifted video signal S1 is inverted, thereby yet further emphasizing the scrambling effect.

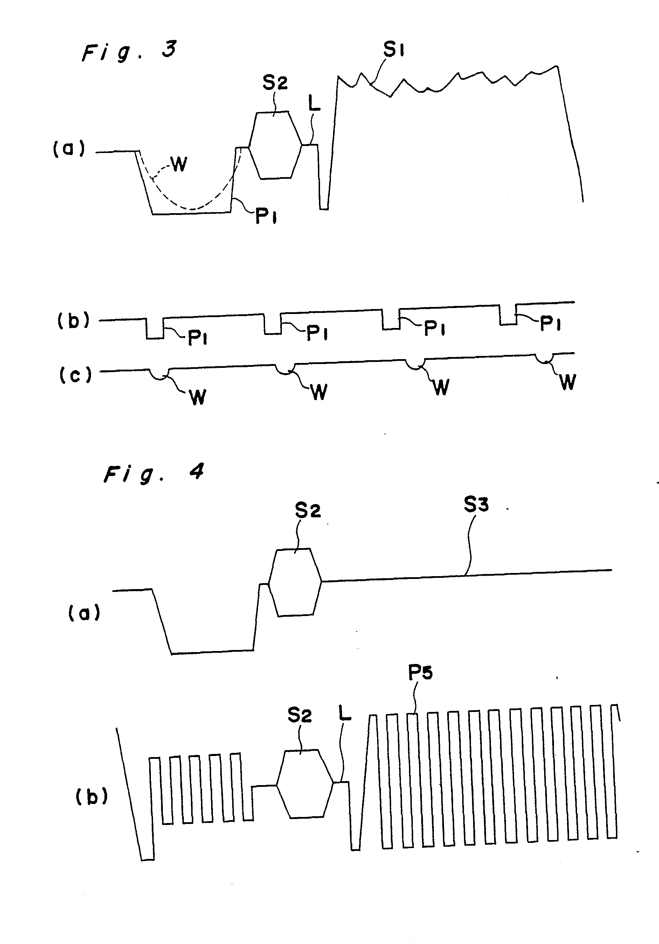

Referring to Fig. 3, instead of replacing the horizontal sync pulses P1 with substitute pulses P5, the horizontal sync pulses P1 can be replaced with counterfeit pulses, such as semi-circular pulses W (Fig. 3, waveform (c)) having a frequency fH-d, which is different from that of the horizontal sync pulses P1. When this is done, since the phase of the semi-circular pulses W is not equal to that of the horizontal sync pulses P1, the horizontal synchronization in the television receiver can not be done properly, thereby resulting in the scrambling effect.

According to the preferred embodiment, in the case where the downward shift mentioned above is effected, the downward shift can be applied not only to the video signals S1 appearing in lines other than lines 1 to 21, but also to blank video signals S3 (appearing in lines 1 to 21 at corresponding portions where the video signals S1 are to be located), such as shown in Fig. 1, waveform (a) or Fig. 4, waveform (a). By the downward shift of the blank video signals S3, a number of negative going pulses (or one long negative going pulse) are formed, which may cause the vertical synchronization. Accordingly, it is preferable to add substitute pulses P5 to the shifted down blank video signals S3, as indicated in Fig. 4 waveform (b). Thus, the average level of the substitute pulses P5 is approximately equal to the pedestal level L. Thus, the shifted down blank video signals S3 may not be detected as an apparent vertical sync pulses in the television receiver, thereby refraining the television signal from any vertical synchronization. It is to be noted that the color burst signals should be maintained as they are without giving any scrambling effect.

The above description is particularly directed to the scrambling of television signal of even fields, such as shown in Fig. 1 waveforms (a) and (b). The scrambling of television signal of odd fields can be carried out substantially in the same manner as the even fields with some minor changes due to the difference of line position along the television signal. As apparent from Fig. 1 waveforms (a') and (b'), one difference is, e.g., the length of equalizing pulse period EP of the second occurrence which is longer in odd field. Another difference is in the line 21. In the even field, the line 21 carries blank video signal S3, but in the odd field, the line 21 carries both blank video signal S3 and normal video signal S1. Thus, in the odd field, line 21, the substitute pulses P5 are added only in the first half portion.

In the lines carrying a color burst signal S2, no matter whether the line is in the blanking period VB or not, the color burst signal S2 is maintained as they are with no scrambling effect. If the color burst signal S2 is once scrambled, it is very difficult to descramble it. Even if it is descrambled, 3.58 MHz pulses may be deteriorated, adversely affecting the reproduced picture.

Next, the description will be directed to a scrambling circuit according to the first embodiment of the present invention. The scrambling circuit may be provided in the television signal transmitter, such as in the television broadcasting station, for effecting the above described scramble.

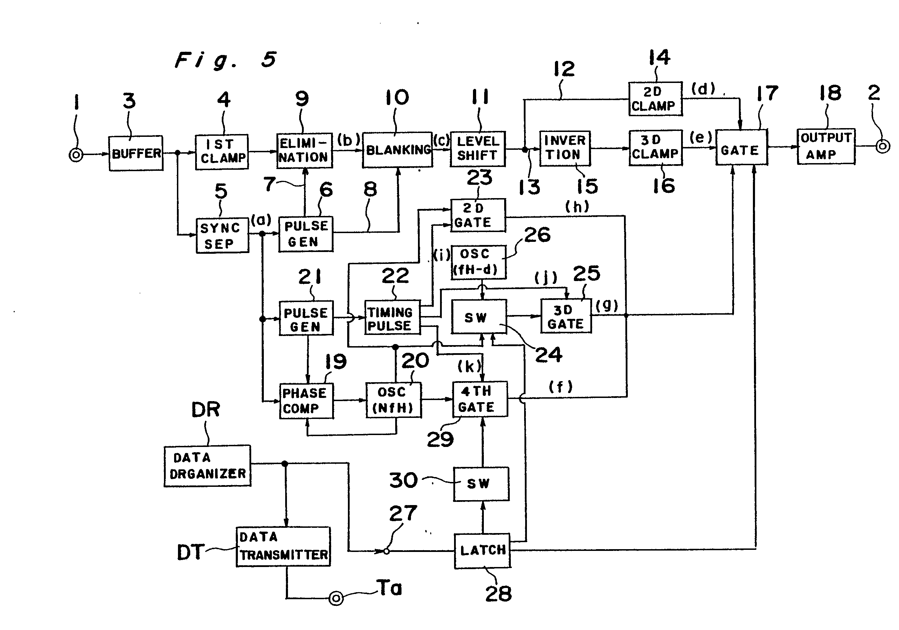

Referring to Fig. 5, the scrambling circuit includes an input 1 to which a non-scrambled, or original, television signal, such as shown in Fig. 1, waveform (a) and (a'), is applied, and an output 2 from which a scrambled television signal, such as shown in Fig. 1 waveforms (b) and (b'), is produced.

At a lower portion in Fig. 5, a data organizer DR is provided which forms scrambling data containing the framing code F and, if necessary, other codes. The scrambling data from data organizer DR is applied through an input 27 to a latch 28 which stores the scrambling data. The latch 28 is connected to a switching circuit 30 which permits only the framing code F to pass therethrough. Thus, a fourth gate circuit 29 connected to switching circuit 30 receives the framing code F from latch 28 via gate circuit 30. Based on the framing code F, latch 28 produces command signals which are applied to mode selection switch 24 and to a gate circuit 17. The scrambling data from organizer DR is also applied to a data transmitter DT which transmits from an output Ta the scrambling data to each subscriber in a parallel relationship with the scrambled television signal, e.g., through an exclusive separate channel preserved for the data transmission.

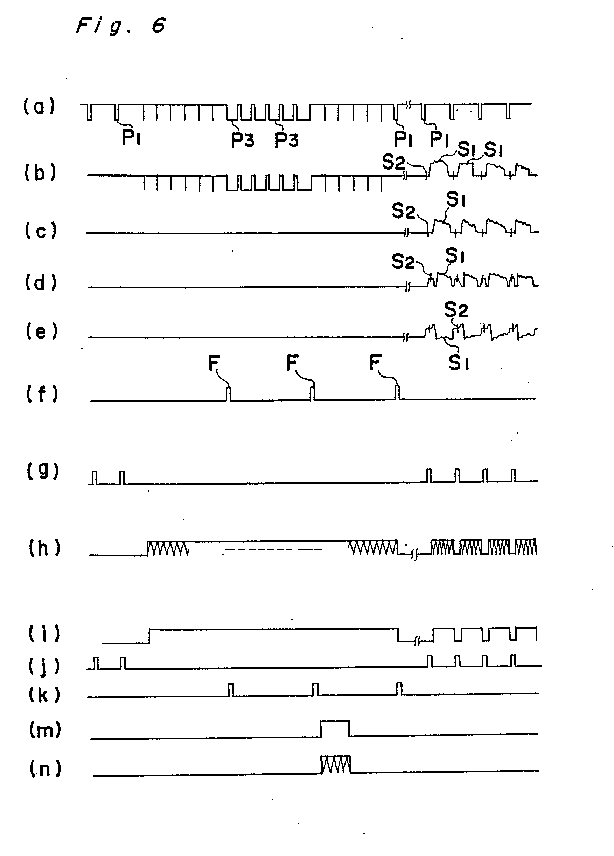

In the illustration, a reference number 3 designates a buffer amplifier, and 4 designates a first clamping circuit for clamping the pedestal level L of the television signal. 5 is a sync separator for separating sync pulses from the television signal and produces a separated sync pulse signal, such as shown in Fig. 6, waveform (a). 6 is a pulse generator for producing a first pulse through a line 7 to an elimination circuit 9, and a second pulse through a line 8 to a blanking circuit 10. The first pulse is synchronized with the horizontal sync pulse P1, but its pulse width is slightly wider than the horizontal sync pulse P1. The second pulse is a wide pulse which covers lines 1 through 9. By the first pulses from pulse generator 6, elimination circuit 9 eliminates the horizontal sync pulses P1 from the television signal applied thereto from first clamping circuit 4, and produces a signal such as shown in Fig. 6, waveform (b). By the second pulse from pulse generator 6, blanking circuit 10 cuts off all the pulses contained in the lines 1 through 9. Thus, blanking circuit 10 produces a signal such as shown in Fig. 6, waveform (c).

A reference number 11 designates a level shift circuit for shifting down the obtained signal, except the color burst signal and its around portion, for a predetermined amount. Its output signal is applied both to a second clamping circuit 14 and to an inversion circuit 15. The second clamping circuit 14 produces a non-inverted video signal, such as shown in Fig. 6, waveform (d), which is applied to gate circuit 17. The inversion circuit 15 produces a signal which is applied through a third clamping circuit 16 to gate circuit 17. Thus, the third clamping circuit 16 produces an inverted video signal, such as shown in Fig. 6, waveforem (e). The second and third clamping circuits 14 and 16 are provided to make the reference level, such as pedestal level L, of the inverted and non-inverted video signals even with each other. By the command signal from latch 28, the gate circuit 17 selects either inverted or non-inverted video signal. For example, it may be so programmed as to alternately select the inverted and non-inverted video signals relatively to the field change, or television program change. Or, the selection may be effected at random.

A reference number 19 designates a phase comparator and 20 designates a voltage-controlled oscillator for generating pulses having a frequency NfH. The phase comparator 19 compares the phase of a composite sync pulse signal from sync separation circuit 5 and an output signal from voltage-controlled oscillator 20, and produces an output representing the phase difference. The signal produced from phase comparator 19 is applied to voltage-controlled oscillator 20, thereby defining a phase-locked loop (PLL) to stabilize the oscillation. Thus, voltage-controlled oscillator 20 produces the substitute pulses P5 which are applied to a second gate circuit 23 and a mode selection switch 24. Since the equivalent pulses P4 in the composite sync pulse signal has a frequency equal to 2fH, which is not equal to fH, these pulses P4 adversely affects on the PLL operation and, therefore, are eliminated in phase comparator 19 by the pulses from a second pulse generator 21.

The second pulse generator 21 also produces pulses synchronized with horizontal sync pulses P1 having a frequency fH, which are applied to a timing pulse generator 22. The timing pulse generator 22 produces three different timing pulse signals, such as shown in Fig. 6, waveforms (i), (j) and (k).

The first timing pulse signal (waveform (i)) is fed to the second gate 23. Thus, second gate 23 produces the substitute pulses P5 during the presence of the first timing pulse. Thus, second gate 23 produces an output signal, such as shown in Fig. 6, waveform (h).

The second timing pulse signal (waveform (j)) is fed to a third gate circuit 25 which also receives a signal from mode selection switch 24. Mode selection switch 24 receives the substitute pulses P5 from oscillator 20 and semi-circular pulses W from an oscillator 26. In accordance with a command signal from latch 28, either substitute pulses P5 or semi-circular pulses W are transmitted from mode selection switch 24 to third gate circuit 25. Thus, during the presence of the second timing pulse from the timing pulse generator 22 (corresponding to horizontal sync pulse periods in television signal excluding the equalizing pulse periods EP and vertical sync pulse period VP), third gate circuit 25 produces the selected signal from mode selection switch 24, such as shown in Fig. 6, waveform (g).

The third timing pulse signal (waveform (k)) is fed to the fourth gate circuit 29 which also receives the framing code F from the switching circuit 30. Thus, gate circuit 29 produces framing code F when the third timing pulse signal is present, such as shown in Fig. 6, waveform (f). The framing code F is shown by a single pulse in Fig. 6 or in Fig. 1, but actually it is defined by a number of bits in a binary code.

The output signals from gates 23, 25 and 29 are all applied to the gate 17, and in accordance with the timing pulse from the generator 22, such output signals and the selected video signal are sequentially produced from gate 17 and are applied to an output amplifier 18 and further to output 2.

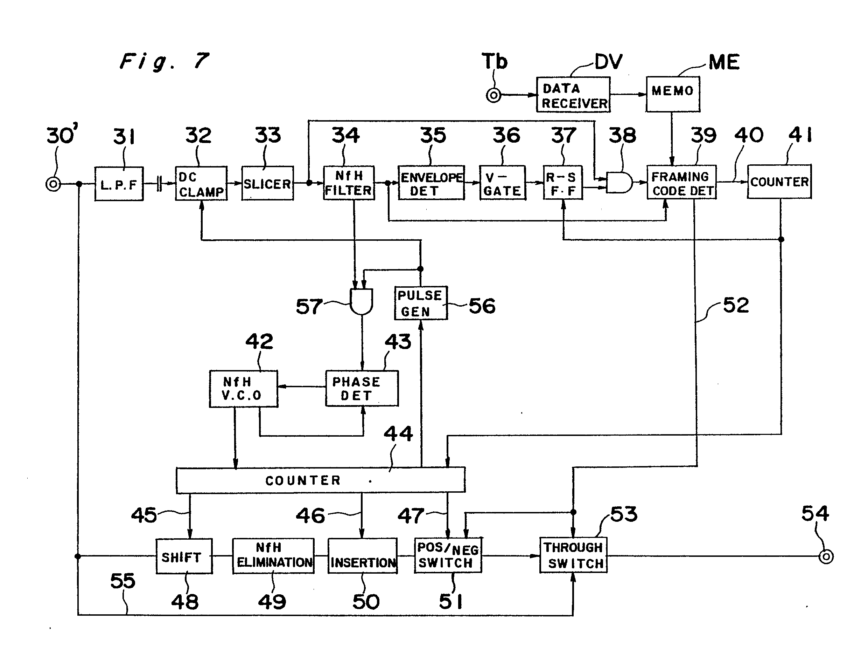

Referring to Fig. 7, a descrambling circuit provided, e.g., in each subscriber, is shown. The descrambling circuit includes an input 30' for receiving the scrambled television signal, such as shown in Fig. 1 waveforms (b) and (b'), from the output 2 of the scrambling circuit of Fig. 5, and an output 54 for producing a descrambled television signal, such as shown in Fig. 1, waveform (a) and (a').

At an upper portion in Fig. 7, a data receiver DV is provided for receiving the scrambling data containing the framing code F through an input Tb from the data transmitter DT shown in Fig. 5. The framing code F is stored in a memory ME and is applied to a framing code detector 39.

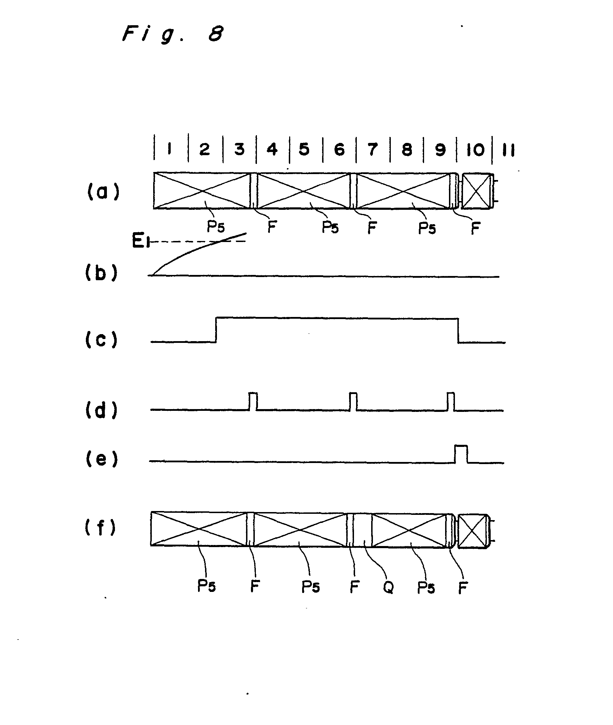

A reference number 31 designates a low-pass filter for cutting off the color signal containing the color burst signal, 32 is a DC clamping circuit and 33 is a slicer for equalizing the amplitude of pulses of framing code F, since its amplitude may be undesirably changed during the transmission. 34 is an NfH filter, having a certain degree of continuity with respect to NfH Hz pulses. It is to be noted that filter 34 eliminates the video signal. 35 is an envelope detector defined by capacitor (not shown) which is charged and discharged. The output from envelope detector 35 will not exceed a predetermined level E1 during the charge of a train of substitute pulses P5 in horizontal sync pulses P1, such as shown in Fig. 2, waveforms (b) and (c), or during the charge of a train of substitute pulses P5 in lines 10 to 21, such as shown in Fig. 1, waveform (b), because the number of pulses P5 in each train is not so many. But, during the charge of a train of substitute pulses P5 in lines 1 to 9, the output from envelope detector 35 exceeds the predetermined level E1, as shown in Fig. 8, waveforms (a) and (b).

When the output of envelope detector 35 exceeds the predetermined level E1, a V-gate 36 connected thereto opens. In response to the opening of V-gate 36, an R-S flip-flop 37 is set to produce HIGH, as shown in Fig. 8, waveform (c). An AND gate 38 is connected to R-S flip-flop 37, and is enabled by the HIGH from flip-flop 37, thereby transmitting the output from slicer 33 to the framing code detector 39. In the framing code detector 39, framing code F from the slicer 33 is compared with framing code F from memory ME. If these two framing codes are the same with each other, the detector 39 produces a signal (Fig. 8, waveform (d)) for effecting the descrambling. Such a signal (Fig. 8, waveform (d)) is applied through a line 52 to a through-switch circuit 53 to permit the transmission of descrambled signal from positive/negative switch circuit 51 to output 54 as will be described in detail later. Such a signal (Fig. 8, waveform (d)) includes a command signal indicating whether the video signal has been inverted or not. This command signal is applied through line 52 to positive/negative switch 51 for inverting the video signal, if needed, to return it back to the original figure.

If, on the contrary, these two framing codes are not the same with each other, the framing code detector 39 produces a signal which prevents circuit from carrying out the descrambling. In this case, the signal from the detector 39 actuates the through-switch circuit 53 such that the television signal applied to the input 30', no matter it is scrambled or not, is directly transmitted to the output 54 via bypass line 55.

The comparison in the framing code detector 39 is carried out by the use of a shift register arrangement (not shown), which is driven by NfH pulses obtained from NfH filter 34. The framing code detector 39 produces a pulse upon detection of one framing code, and this pulse is applied through a line 40 to a modulo-3 counter 41 for counting the number of framing codes F. When the counter 41 has counted three framing codes, it produces a carry signal (Fig. 8, waveform (e)) which is applied to R-S flip-flop 37, thereby resetting the same. Thus, the output of R-S flip-flop 37 changes to LOW to disable AND gate 38. The carry signal from the counter 41 is also applied to a counter 44 which counter 44 then starts counting.

Still referring to Fig. 7, a reference number 42 designates a voltage-controlled oscillator for generating pulses having a frequency NfH. A phase detector 43 is provided to compare the phase of NfH pulse from oscillator 42 with NfH pulse from NfH filter 34 through AND gate 57, and produces a voltage signal representing the phase difference. The voltage signal is fed to the oscillator 42 to control the oscillation frequency in the PLL system. The generated NfH pulses from the oscillator 42 are applied to a counter 44 which starts counting the NfH pulses upon receipt of the carry signal from the counter 41 so as to form the composite sync pulses, and other timing pulses.

The scrambled television signal applied to the input 30' is fed in series through shift circuit 48, NfH pulse elimination circuit 49, insertion circuit 50, positive/negative switch 51 and through-switch circuit 53, thereby descrambling the television signal, step by step.

In the shift circuit 48 the television signal is shifted back to the original level. More specifically, the shift circuit 48 receives timing pulses from counter 44 at periods corresponding to the color burst signal and its around portion. Accordingly, the television signal excluding the color burst signal and its around portion is shifted upward to return the television signal back to the original level.

Then, in the NfH pulse elimination circuit 49, the substitute pulses P5 are eliminated.

Next, in the insertion circuit 50, composite sync pulses transmitted thereto from counter 44 through lines 46 are added to the television signal.

Then, in the positive/negative switch 51, the video signals which have been inverted in the scrambling circuit is again inverted back to the original video signal. Which video signals should be inverted by the positive/negative switch 51 is determined by the command signal applied thereto from framing code detector 39. Accordingly, the television signal produced from the positive/negative switch 51 is descrambled complete, and is transmitted via through-switch 53 to the output 54.

The counter 44 is also coupled to a pulse generator 56 which produces a wide pulse that covers lines 1 through 9 in each field. The wide pulse is applied to an AND gate 57, so that the AND gate 57 provides the NfH pulses to the phase detector 43 only during the lines 1 through 9. This arrangement prevents the phase detector 43 from receiving video signal which may cause an erroneous detection by the phase detector 43, because the phase detector 43 may take the video signal as a signal having a frequency NfH. The wide pulse is also applied to DC clamping circuit 32, because the circuit operation will be stabilized most when the DC clamp is carried out during that pulse period.

According to the above-described descrambling circuit, the counter 44 starts counting and supplying composite pulses and timing pulses in response to the carry signal from counter 41. Thus, the counter 44 starts its operation from line 10 of the very first field. Thus, lines 1 through 9 of the very first field are not provided with any composite pulses. But, since all the composite pulses are added in every lines of the subsequent fields, the missing of composite pulses in lines 1 through 9 of the very first field will not deteriorate the reproduced picture.

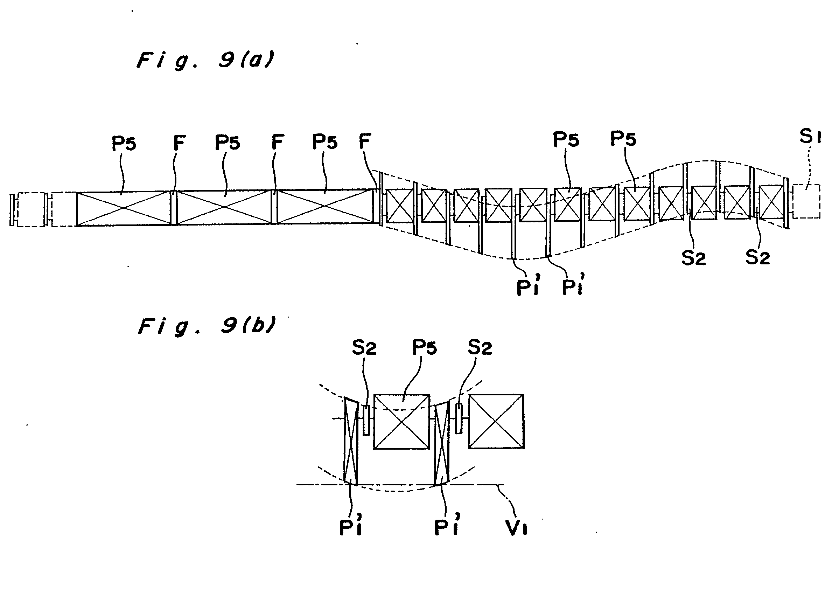

Referring to Figs. 9(a) and 9(b), a first modification of a scrambling system according to the present invention is shown. In the above-described embodiment, horizontal sync pulses P1 have been replaced by substitute pulses P5, as best shown in Fig. 2, waveform (b), and the amplitude of the substitute pulses P5 is rendered to be small. According to the modification of Figs. 9(a) and 9(b), the substituted pulses provided in place of horizontal sync pulses, which are indicated by a reference character P1', are carried on a sine wave indicated by a dotted line. Accordingly, the bottom peak points of the pulses P1' change in a sine wave fashion. The horizontal sync pulses are detected when the bottom peak points of the pulse falls below a certain level, such as V1 shown in Fig. 9(b). Since the bottom peak point changes as mentioned above, not all the pulses P1' are detected. Furthermore, even if it were detected, the point at which the detection is effected is not always at the left side edge, when viewed in Fig. 9(a) or 9(b), of the pulse P1', but it is sometimes effected at an intermediate point of the pulse width, as best shown in Fig. 9(b).

When the horizontal sync pulses are scrambled in the above described manner, some lines are dropped, and yet the displayed lines are not in alignment with each other.

The above described scrambling effect can be accomplished, for example, by adding a sine wave generator (not shown) between oscillator 20 and mode selection switch 24.

According to a second modification, although it has been described that the three framing codes F in each field have exactly the same code pattern as each other, they may be varied in relation to the field change or even within each field. This modification uses three different types of framing codes Fa, Fb and Fc selected from a number of different types having a function of 1-bit error correction.

The framing codes can be added in such a manner that, in one particular field, three framing codes, e.g., Fa, Fa and Fa are added, in another particular field, three framing codes e.g., Fb, Fb and Fb are added and in yet another particular field, three framing codes, e.g., Fc, Fc and Fc are added. The feature of this arrangement is such that the three framing codes in each field have exactly the same type as each other, but they may be varied in relation to the field change.

Alternatively, the framing codes can be added in such a manner that, in one particular field, three framing codes, e.g., Fa, Fb and Fc are added, in another particular field, three framing codes, e.g., Fa, Fa and Fc are added, and in yet another particular field, three framing codes, e.g., Fb, Fb and Fb are added. The feature of this arrangement is such that the type of three framing codes in each field are selected at random. That is, the framing codes in each field can be different from each other, or can be the same as each other.

By the above arrangement according to the second modification, the framing codes, which are inserted to provide timing information to reform horizontal and vertical sync pulses in the descrambling circuit, are not of the same type. Therefore, it is very difficult for the non-authorized to analyze the scrambled television signal even by observing the waveform.

According to a third modification, the number of framing codes inserted in each field can be changed to different number, such as two. For example, of the three framing codes shown in Fig. 1, waveform (b), the first framing code on the left hand side can be eliminated. In this case, the substitute pulses P5 can be added in place of the eliminated framing code. Alternatively, the first framing code F, as well as the substitute pulses P5 in lines 1, 2 and 3, can be replaced with a zero level signal, in the same waveform (b).

The above modifications can be adapted solely to or in combination with the first embodiment or the second embodiment, the latter of which will be described below.

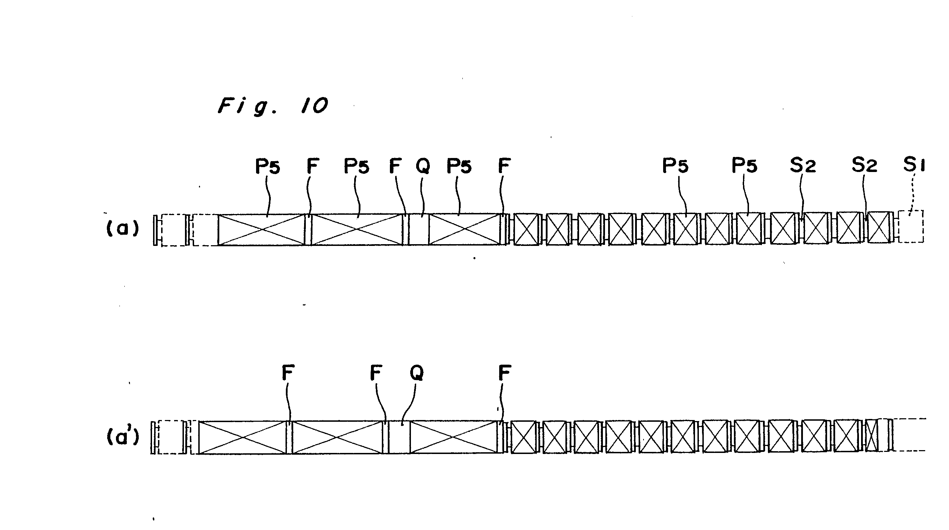

Referring to Fig. 10, scrambled television signals, according to the second embodiment, for the even and odd field are shown. According to the second embodiment, in addition to the three framing codes, a channel information Q is further added which is inserted immediately after the second framing code. The channel information Q is also defined by a plurality of bits in a binary code, and it carries, e.g., television program information, channel information, or any other information.

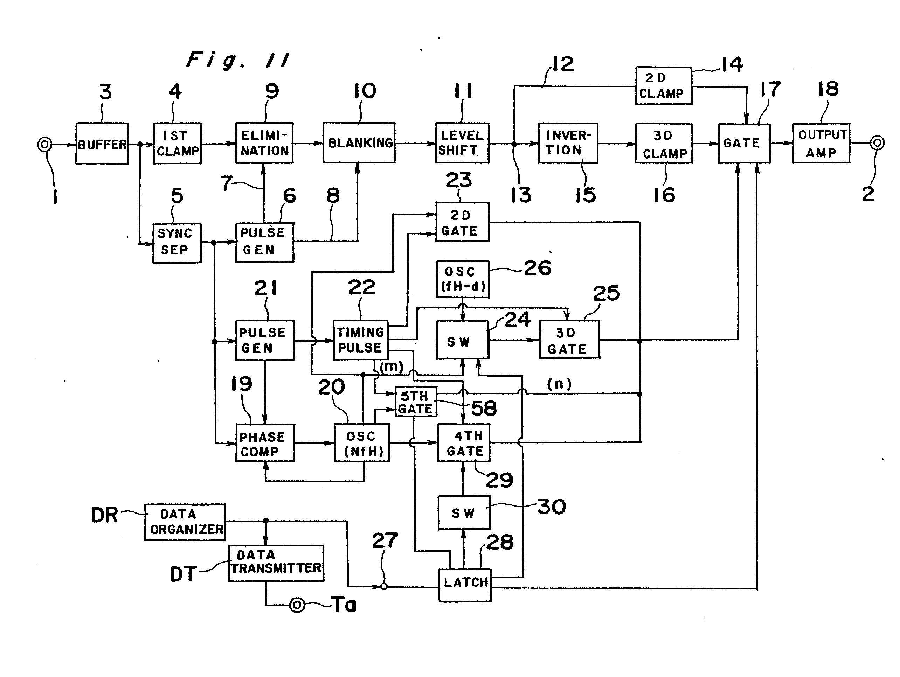

Referring to Fig. 11, a scrambling circuit according to the second embodiment of the present invention is shown. When compared with the first embodiment, the scrambling circuit of the second embodiment further has a fifth gate 58 connected to the timing pulse generator 22 so that gate 58 receives a timing pulse, such as shown in Fig. 6, waveform (m). The fifth gate 58 is also connected to latch 28 for receiving the channel information Q, and to oscillator 20 for receiving NfH pulses. The output of gate 58 is connected to gate 17. The channel data for defining the channel information Q is organized in data organizer DR, and the organized channel data is stored in latch 28. Such a channel data is also transmitted through data transmitter DT to each subscriber via the exclusive separate channel.

Accordingly, during when the timing pulse generator 22 supplies a timing pulse to gate 58, data applied from latch 28 is coded in gate 58 by the NfH pulses from oscillator 20. Thus, gate 58 produces channel information Q, such as shown in Fig. 6, waveform (n). The channel information Q is combined with other codes F and signals in gate 17 to form a scrambled television signal, such as shown in Fig. 10.

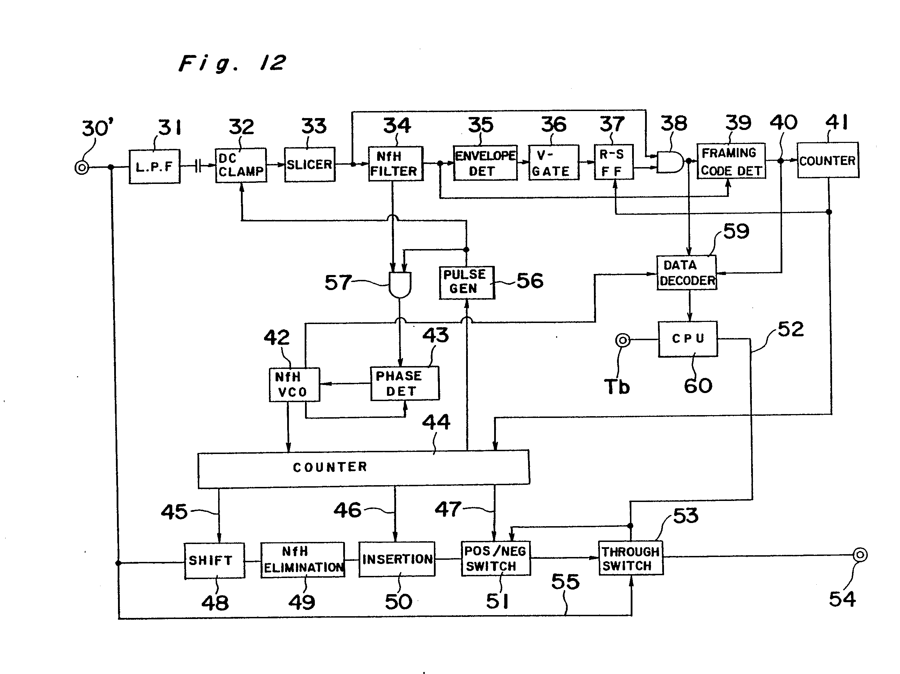

Referring to Fig. 12, a descrambling circuit according to the second embodiment of the present invention is shown. When compared with the first embodiment, the descrambling circuit of the second embodiment has no data receiver DV and memory ME, but instead, it has a CPU (central processing unit) 60 connected to input Tb for receiving the channel data from the scrambling circuit through the exclusive separate channel. Furthermore, a data decoder 59 is provided, which is connected to receive output signals from oscillator 42, AND gate 38 and framing code detector 39. The output of data decoder 59 is connected to CPU 60, and output of CPU 60 is connected to positive/negative switch 51 and to through switch 53.

In operation, in the same manner as the first embodiment, the AND gate 38 produces scrambled television signal in a period when the R-S flip-flop 37 is producing HIGH (Fig. 8, waveform (c)), that is, for example, during lines 3 to 9. Therefore, in this period, AND gate 38 produces framing codes F and channel information Q, as indicated in Fig. 8, waveform (f). Driven by the NfH pulses from oscillator 42, the data decoder 59 receives and detects channel information Q appearing at the output of AND gate 38, the output of data decoder 59 is applied to CPU 60. The program information contained in the channel information Q, which is inserted in the blanking period and carried by the television signal, is compared in CPU 60 with program data which has been applied to CPU 60 through input Tb. It is to be noted that the data appearing at the input Tb is sent from, e.g., broadcasting station through the exclusive separate channel and is decoded in the receiver side.

If the compared result in CPU 60 is such that the two signals are substantially identical to each other, CPU 60 produces a command signal to through-switch 53. Accordingly, through-switch 53 is so turned as to connect output of positive/negative switch 51 to output 54.

On the contrary, if the compared result is such that the two signals are not identical to each other, CPU 60 produces a signal to through-switch 53, so that through-switch 53 is so turned as to connect the bypass line 55, carrying the signal received by the input 30', to output 54.

Furthermore, CPU 60 analyzes the scrambling data detected by the data decoder 59. If the analyzed result indicates that the video signal has been inverted, CPU 60 produces a control signal to positive/negative switch 51 to invert the video signal to bring it back to the proper form. If the analyzed result indicates that the video signal has not been inverted, CPU 60 produces a control signal which causes the positive/negative switch 51 to pass through the applied television signal without any change. No comparison is carried out in CPU 60 as to the scrambling data, because according to this embodiment, the scrambling data is not transmitted through the exclusive separate channel and, therefore, it is not present at input Tb.

Since other operations are the same as the first embodiment, a further description therefor is omitted for the sake of brevity.

It is to be noted that in place of channel information Q, subscriber information can be inserted. In this case, the channel information can be transferred through the exclusive separate channel. Furthermore, both the channel information and subscriber information can be inserted in the vertical blanking period. In this case, the subscriber information can be inserted, for example, immediately after the first framing code shown in Fig. 10, waveform (a).

It is also to be noted that the channel information and/or subscriber information can be inserted, not immediately after the framing code, but with a suitable spacing. In such a spacing, substitute pulses may be added.

It is further to be noted that, instead of the vertical blanking period, the channel information and/or subscriber information can be inserted in the horizontal blanking period.

According to the present invention, following meritorious effects can be obtained.

Since at least one framing code is inserted in the scrambled television signal, the television signal can be scrambled in a sophisticated manner without making the television signal complex. Furthermore, the descrambling in the subscriber's receiver can be carried out with a high accuracy, thereby providing pictures with no deterioration. But for the non-subscribers it is difficult to even analyze the scrambled television signal. Also, since the type of framing code can be changed at random in relation to the field change or even within each field, the above difficulty can be made more noticeable.

Also, since the channel information and/or subscriber information is further added in the blanking period, it is possible to eliminate the exclusive separate channel or, the information to be transmitted through the exclusive separate channel can be reduced.

Furthermore, since the information related to the television program can be added to each television program, the poling (the distribution of particular information to each subscriber) speed can be increased.

Although the present invention has been fully described with reference to several preferred embodiments, many modifications and variations thereof will now be apparent to those skilled in the art, and the scope of the present invention is therefore to be limited not by the details of the preferred embodiments described above, but only by the terms of appended claims.

**Claims**

1. A scrambling system for a television signal including:—
means (6, 9, 10) for eliminating vertical synchronization pulses in a vertical synchronization pulse period and equalizing pulses in first and second equalizing pulse periods at opposite ends of said vertical synchronization pulse period;
means (20, 22, 23) for depositing substitute pulses in said vertical synchronization pulse period and first and second equalizing pulse periods with at least one section remained unoccupied by said substitute pulses, said substitute pulses having a frequency equal to an integer times the frequency of the horizontal synchronization pulses; and
means (DR, 28, 30, 20, 22, 29) for depositing a framing code in said one section, said framing code carrying information of television signal scrambling;
characterized in that:
(a) the framing code is synchronized with the substitute pulse and is inserted in the section unoccupied by the substitute pulses so as to maintain the phase of the substitute pulses unchanged; and
(b) the framing code carries the information of scramble so as to enable the descrambling in the receiver and the information of the time reference for generating the vertical synchronization pulse in the receiver.

2. A scrambling system according to claim 1, characterized in that it further includes means (11) for shifting a level of video signal downwardly for a predetermined amount in relation to a pedestal level.

3. A scrambling system according to claim 2, characterized in that it further includes means (15) for inverting said video signal which has been shifted downwardly.

4. A scrambling system according to claim 3, characterized in that it further includes first gate means (17) for selectively permitting either one of video signal produced from said shifting means or video signal produced from said inverting means to pass therethrough.

5. A scrambling system according to claim 4, characterized in that said framing code carries a first command signal for controlling said first gate means to select one of said two video signals.

6. A scrambling system according to claim 2, characterized in that said shifting means further shifts blank video signals.

7. A scrambling system according to claim 6, characterized in that said substitute pulses are added in said blank video signals which have been shifted down.

8. A scrambling system according to claim 1, characterized in that said eliminating means further eliminates horizontal synchronization pulses.

9. A scrambling system according to claim 8, characterized in that it further includes means (26, 22, 25) for depositing counterfeit pulses (W) having a frequency which is different from that of horizontal synchronization pulses.

10. A scrambling system according to claim 8, characterized in that it further includes means (20, 22, 25) for depositing substitute pulses in place of said horizontal synchronization pulses.

11. A scrambling system according to claim 10, characterized in that it further includes means for generating a sine wave signal, and means for imposing the substitute pulses in place of said horizontal synchronization pulses on said sine wave signal.

12. A scrambling system according to claim 1, characterized in that said substitute pulse depositing means (20, 22, 23) deposits substitute pulses in said vertical sync pulse period and first and second equalizing pulse periods with another section remained unoccupied by said substitute pulses, and in that it further includes means (DR, 28, 20, 22, 58) for depositing an information code in said another section, said information code carrying information concerning the channel and/or subscriber.

13. A scrambling system according to claim 1, characterized in that said substitute pulse depositing means (20, 22, 23) deposits substitute pulses in said vertical synchronization pulse period and first and second equalizing pulse periods with a plurality of sections remained unoccupied by said substitute pulses, and in that said framing code depositing means (DR, 28, 30, 20, 22, 29) deposits one framing code in each of said plurality of sections.

14. A scrambling system according to claim 13, characterized in that said plurality of framing codes in one field are of the same type as each other.

15. A scrambling system according to claim 14, characterized in that said plurality of framing codes vary relative to the field change.

16. A scrambling system according to claim 13, characterized in that said plurality of framing codes in each field are selected from different types at random.

**Patentansprüche**

1. Verschlüsselungssystem für ein Fernsehsignal mit:
Mitteln (6, 9, 10) zur Eliminierung von Vertikalsynchronimpulsen in einer Vertikalsynchronimpulsperiode und von Ausgleichsimpulsen in einer ersten und einer zweiten Ausgleichsimpulsperiode an entgegengesetzten Enden der Vertikalsynchronimpulsperiode,
Mitteln (20, 22, 23) zur Anlagerung von Ersatzimpulsen in der Vertikalsynchronimpulsperiode und der ersten und der zweiten Ausgleichsimpulsperiode, wobei zumindest ein Bereich durch die Ersatzimpulse unbesetzt verbleibt und die Ersatzimpulse eine Frequenz haben, die gleich einem ganzzahligen Vielfachen der Frequenz der Horizontalsynchronimpulse ist, und
Mitteln (DR, 28, 30, 20, 22, 29) zur Anlagerung eines Bildfangcodes in diesem einen Bereich, wobei der Bildfangcode die Informationen der Fernsehsignalverschlüsselung trägt,
dadurch gekennzeichnet, daß:
(a) Der Bildfangcode mit den Ersatzimpulsen synchronisiert ist und so in den von den Ersatzimpulsen nicht besetzten Bereich eingefügt ist, daß die Phase der Ersatzimpulse ungeändert aufrechterhalten wird, und
(b) der Bildfangcode die Verschlüsselungsinformationen trägt, so daß die Entschlüsselung im Empfänger ermöglicht wird, und die Zeitbasis-Information zur Erzeugung des Vertikalsynchronimpulses im Empfänger.

2. Verschlüsselungssystem nach Anspruch 1, dadurch gekennzeichnet, daß es ferner Mittel (11) aufweist zum Verschieben des Pegels eines Videosignals um einen vorgegebenen Betrag bezüglich eines Schwarzwertpegels nach unten.

3. Verschlüsselungssystem nach Anspruch 2, dadurch gekennzeichnet, daß es ferner Mittel (15) zum Invertieren des nach unten verschobenen Videosignals aufweist.

4. Verschlüsselungssystem nach Anspruch 3, dadurch gekennzeichnet, daß es ferner eine erste Toreinrichtung (17) zum wahlweisen Durchlassen entweder eines Fernsehsignals, das von der Verschiebeeinrichtung erzeugt wurde, oder eines Fernsehsignals, das von der Invertierungseinrichtung erzeugt wurde, aufweist.

5. Verschlüsselungssystem nach Anspruch 4, dadurch gekennzeichnet, daß der Bildfangcode zur Steuerung der ersten Toreinrichtung zur Auswahl eines der beiden Fernsehsignale ein erstes Befehlssignal trägt.

6. Verschlüsselungssystem nach Anspruch 2, dadurch gekennzeichnet, daß die Verschiebeeinrichtung desweiteren Leersignale verschiebt.

7. Verschlüsselungssystem nach Anspruch 6, dadurch gekennzeichnet, daß die Ersatzimpulse zu den nach unten verschobenen Leersignalen addiert werden.

8. Verschlüsselungssystem nach Anspruch 1, dadurch gekennzeichnet, daß die Austasteinrichtung desweiteren Horizontalsynchronimpulse eliminiert.

9. Verschlüsselungssystem nach Anspruch 8, dadurch gekennzeichnet, daß sie ferner Mittel (26, 22, 25) umfaßt zur Anordnung verfälschter Impulse (W), die eine Frequenz haben, die von der der Horizontalsynchronimpulse verschieden ist.

10. Verschlüsselungssystem nach Anspruch 8, dadurch gekennzeichnet, daß es ferner Mittel (20, 22, 25) zur Anordnung von Ersatzimpulsen anstatt der Horizontalsynchronimpulse aufweist.

11. Verschlüsselungssystem nach Anspruch 10, dadurch gekennzeichnet, daß es ferner Mittel zum Erzeugen eines Sinussignals und Mittel zum Überlagern der Ersatzimpulse anstatt der Horizontalsynchronimpulse auf das Sinussignal aufweist.

12. Verschlüsselungssystem nach Anspruch 1, dadurch gekennzeichnet, daß die Ersatzimpulseinrichtung (20, 22, 23) die Ersatzimpulse in der Vertikalsynchronimpulsperiode und der ersten und der zweiten Ausgleichsimpulsperiode anordnet, wobei ein anderer Bereich durch die Ersatzimpulse unbesetzt verbleibt und daß es ferner Mittel (DR, 28, 20, 22, 58) umfaßt zur Anordnung eines Informationscodes in diesem anderen Bereich, wobei der Informationscode Informationen bezüglich des Kanals und/oder des Teilnehmers trägt.

13. Verschlüsselungssystem nach Anspruch 1, dadurch gekennzeichnet, daß die Ersatzimpulseinrichtung (20, 22, 23) die Ersatzimpulse in der Vertikalsynchronimpulsperiode und der ersten und der zweiten Ausgleichsimpulsperiode anordnet, wobei eine Anzahl von Bereichen durch die Ersatzimpulse unbesetzt verbleibt, und daß die Bildfangcodeeinrichtung (DR, 28, 30, 20, 22, 29) einen Bildfangcode in jedem aus der Anzahl von Bereichen anordnet.

14. Verschlüsselungssystem nach Anspruch 13, dadurch gekennzeichnet, daß die Anzahl von Bildfangcodes ein einem Halbbild jeweils vom gleichen Typ sind.

15. Verschlüsselungssystem nach Anspruch 14, dadurch gekennzeichnet, daß die Anzahl der Bildfangcodes sich relativ zu dem Bildwechsel ändert.

16. Verschlüsselungssystem nach Anspruch 13, dadurch gekennzeichnet, daß die Anzahl der Bildfangcodes in jedem Feld zufällig aus verschiedenen Typen ausgewählt ist.

**Revendications**

1. Système de cryptage pour un signal de télévision comportant:
un dispositif (6, 9, 10) d'élimination d'impulsions de synchronisation verticale, dans une période d'impulsions de synchronisation verticale et d'impulsions de correction dans une première et une seconde période d'impulsions de correction aux extrémités opposées de ladite période d'impulsion de synchronisation verticale;
un dispositif (20, 22, 23) destiné à déposer des impulsions de remplacement dans ladite période d'impulsions de synchronisation verticale et la première et la seconde période d'impulsions de correction avec au moins une section restant inoccupée par lesdites impulsions de remplacement, lesdites impulsions de remplacement qui ont une fréquence égale à un nombre entier de fois la fréquence des impulsions de synchronisation horizontale; et
un dispositif (DR, 28, 30, 20, 22, 29) destiné à déposer un code de mise en trame dans ladite section, ledit code de mise en trame portant des informations de cryptage du signal de télévision; caractérisé en ce que:
(a) le code de mise en trame est synchronisé avec l'impulsion de remplacement et il est introduit dans la section inoccupée par les impulsions de remplacement de manière à maintenir inchangée la phase des impulsions de remplacement; et
(b) le code de mise en trame porte les informations de cryptage de manière à autoriser le décryptage dans le récepteur et les informations de référence de temps pour produire l'impulsion de synchronisation verticale dans le récepteur.

2. Système de cryptage selon la revendication 1, caractérisé en ce qu'il comporte en outre un dispositif (11) destiné à décaler le niveau d'un signal vidéo vers le bas d'une valeur prédéterminée, en rapport avec un niveau de plateau.

3. Système de cryptage selon la revendication 2, caractérisé en ce qu'il comporte en outre un dispositif (15) destiné à inverser ledit signal vidéo qui a été décâlé vers le bas.

4. Système de cryptage selon la revendication 3, caractérisé en ce qu'il comporte en outre un premier dispositif à porte (17) destiné à permettre sélectivement le passage de l'un ou l'autre du signal vidéo produit par ledit dispositif de décalage ou dudit signal vidéo produit par ledit dispositif d'inversion.

5. Système de cryptage selon la revendication 4, caractérisé en ce que ledit code de mise en trame porte un premier signal de commande destiné à commander ledit dispositif à porte pour sélectionner l'un des deux signaux vidéo.

6. Système de cryptage selon la revendication 2, caractérisé en ce que ledit dispositif de décalage décale en outre des signaux vidéo de blocage.

7. Système de cryptage selon la revendication 6, caractérisé en ce que lesdites impulsions de remplacement sont ajoutées dans lesdits signaux vidéo de blocage qui ont été décalés vers le bas.

8. Système de cryptage selon la revendication 1, caractérisé en ce que ledit dispositif d'élimination élimine en outre des impulsions de synchronisation horizontale.

9. Système de cryptage selon la revendication 8, caractérisé en ce qu'il comporte en outre un dispositif (26, 22, 25) destiné à déposer des impulsions contrefaites destinés à déposer des impulsions contrefaites W ayant une fréquence qui est différente de celle des impulsions de synchronisation horizontale.

10. Système de cryptage selon la revendication 8, caractérisé en ce qu'il comporte en outre un dispositif (20, 22, 25) destiné à déposer des impulsions de remplacement au lieu desdites impulsions de synchronisation horizontale.

11. Système de cryptage selon la revendication 10, caractérisé en ce qu'il comporte en outre un dispositif qui produit un signal sinusoïdal et un dispositif qui impose les impulsions de remplacement en place desdites impulsions de synchronisation horizontale sur ledit signal sinusoïdal.

12. Système de cryptage selon la revendication 1, caractérisé en ce que ledit dispositif (20, 22, 23) de dépôt d'impulsions de remplacement dépose des impulsions de remplacement dans ladite période d'impulsions de synchronisation horizontale et la première et la seconde période d'impulsions de correction avec une autre section restant inoccupée par lesdites impulsions de remplacement et en ce qu'il comporte en outre un dispositif (DR, 28, 20, 22, 58) destiné à déposer un code d'informations dans ladite autre section, ledit code d'informations portant des informations concernant le canal et/ou l'abonné.

13. Système de cryptage selon la revendication 1, caractérisé en ce que ledit dispositif (20, 22, 23) de dépôt d'impulsions de remplacement déposent des impulsions de remplacement dans ladite période d'impulsions de synchronisation verticale et la première et la seconde période d'impulsions de correction avec plusieurs sections restant inoccupées par lesdites impulsions de remplacement et en ce que ledit dispositif (DR, 28, 30, 20, 22, 29) de dépôt de code de mise en trame dépose un code de mise en trame dans chacune desdites plusieurs sections.

14. Système de cryptage selon la revendication 13, caractérisé en ce que lesdits plusieurs codes de mise en trame dans une trame sont du même type les uns que les autres.

15. Système de cryptage selon la revendication 14, caractérisé en ce que lesdits plusieurs codes de mise en trame varient par rapport au changement de trame.

16. Système de cryptage selon la revendication 13, caractérisé en ce que lesdits plusieurs codes de mise en trame dans chaque trame sont sélectionnés de façon aléatoire parmi des types différents.

*Fig. 1*

(a) EVEN FIELD

EP — VP — EP

VB

1 2 3 4 5 6 7 8 9 10 11 12 13 14 15 16 17 18 19 20 21

S1 S1 S1
S2 P1 P4 P4 P4 P3 P2 P2 P3 P4 P4 P1 S2 P1 S2 S2 S3 S3 P1 S2 S2 S3 S3 S2 S2 S1 S1

(b) P5 P5 P5 P5 F F F P5 P5 P5 P5 P5 P5 S2 S2 S3 S2 S2 S1

(a') ODD FIELD

1 2 3 4 5 6 7 8 9 10 11 12 13 14 15 16 17 18 19 20 21

S1 S1 S1 S1

(b') F F F

Fig. 2

Fig. 3

(a)

S2  L  S1

W

P1

(b)  P1  P1  P1  P1

(c)  W  W  W  W

Fig. 4

S2  S3

(a)

P5

S2  L

(b)

Fig. 5

0 119 751

*Fig. 6*

*Fig. 7*

Tb ○→ [DATA RECEIVER] (DV) → [MEMO] (ME)

30' ○→ [L.P.F] 31 —|— [DC CLAMP] 32 → [SLICER] 33 → [NfH FILTER] 34 → [ENVELOPE DET] 35 → [V-GATE] 36 → [R-S F·F] 37 → 38 → [FRAMING CODE DET] 39 → [COUNTER] 40 41

[PULSE GEN] 56
57

[NfH V.C.O] 42 ← [PHASE DET] 43
44

[COUNTER] 44

45 46 47 52 53 54 ○

[SHIFT] 48 → [NfH ELIMINATION] 49 → [INSERTION] 50 → [POS/NEG SWITCH] 51 → [THROUGH SWITCH] 53

55

0 119 751

6

Fig. 8

0 119 751

**F i g . 9 (a)**

**F i g . 9 (b)**

Fig. 10

(a)

(a')

Fig. 11

0 119 751

# Fig. 12